# EUROPEAN PATENT SPECIFICATION

(11) **EP 0 923 002 B1**
(45) Date of publication and mention of the grant of the patent: **26.03.2003**
(21) Application number: 98304504.8
(22) Date of filing: 08.06.1998
(51) Int. Cl.: G03G 15/00, B65G 39/16

(54) **Photoreceptor belt steering apparatus for a printer**
Steuerungsvorrichtung für Photoleiterband in einem Druckgerät
Dispositif de régulation pour une bande de photorécepteur dans un appareil à imprimer

(30) Priority: 11.12.1997 KR 9767747
(43) Date of publication of application: 16.06.1999
(73) Proprietor: Samsung Electronics Co., Ltd., Suwon-city, Kyungki-do (KR)
(72) Inventor: Lee, Jong-chan, Paldal-gu, Suwon-city, Kyungki-do (KR)
(74) Representative: Robinson, Ian Michael

(56) References cited:
- EP-A- 0 075 398
- EP-A- 0 458 260
- US-A- 5 246 099
- US-A- 5 316 524
- US-A- 5 659 851
- PATENT ABSTRACTS OF JAPAN vol. 096, no. 006, 28 June 1996 & JP 08 054790 A (FUJI XEROX CO LTD), 27 February 1996

## Description

The present invention relates to a photoreceptor belt steering apparatus for preventing lateral slip of a photoreceptor belt used in a printer.

In a printer such as a laser printer, a laser beam scans a photoreceptive medium such as a photoreceptor belt to form a latent electrostatic image. The latent electrostatic image is developed with a toner of a predetermined color using a development unit and then the developed image is transferred to a printing paper.

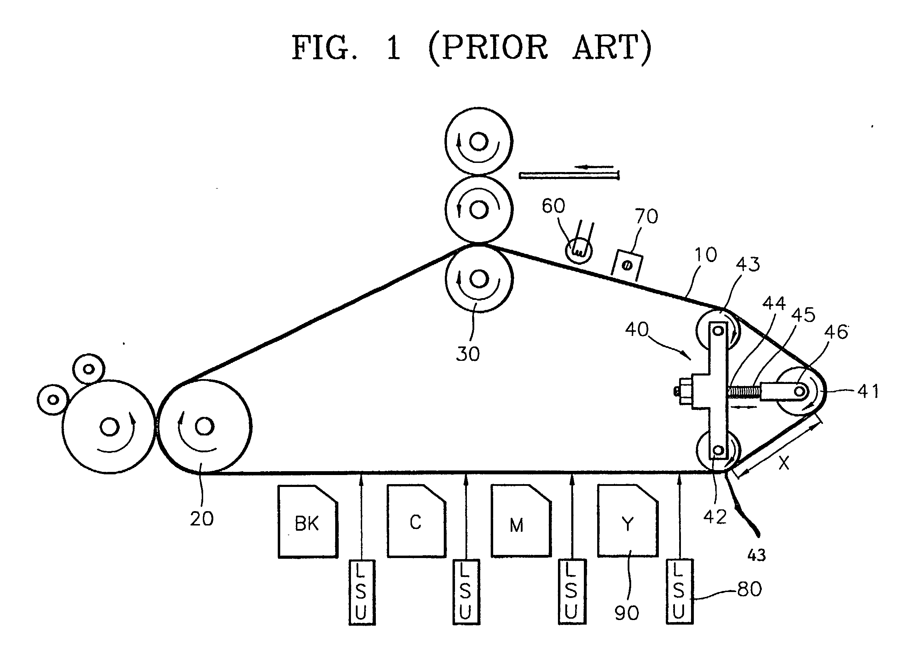

Referring to Figure 1, a general printer has a photoreceptor belt 10 circulating around a driving roller 20, a transfer backup roller 30, and a steering roller 41 which are installed in a main body of the printer.

Near the photoreceptor belt 10, there is an erasing lamp 60 for erasing a surface electrical potential formed on the photoreceptor belt 10 by emitting a light beam, a charger 70 for charging the photoreceptor belt 10 removed of the surface electrical potential to a predetermined electrical potential, a plurality of laser scanning units 80 for forming a latent electrostatic image corresponding to each color by scanning the photoreceptor belt 10 using a laser beam, and a plurality of development units 90 for developing a portion having the latent electrostatic image.

In a printer having the above structure, since the photoreceptor belt 10 operated while being wound around the respective rollers 20, 30 and 41, a lateral slip of the photoreceptor belt 10 in a longitudinal direction of the rollers 20, 30 and 41 is possible.

Thus, the printer includes a lateral slip detecting sensor (not shown) for detecting a lateral slip of the photoreceptor belt 10, and a photoreceptor belt steering apparatus 40 for correcting the lateral slip.

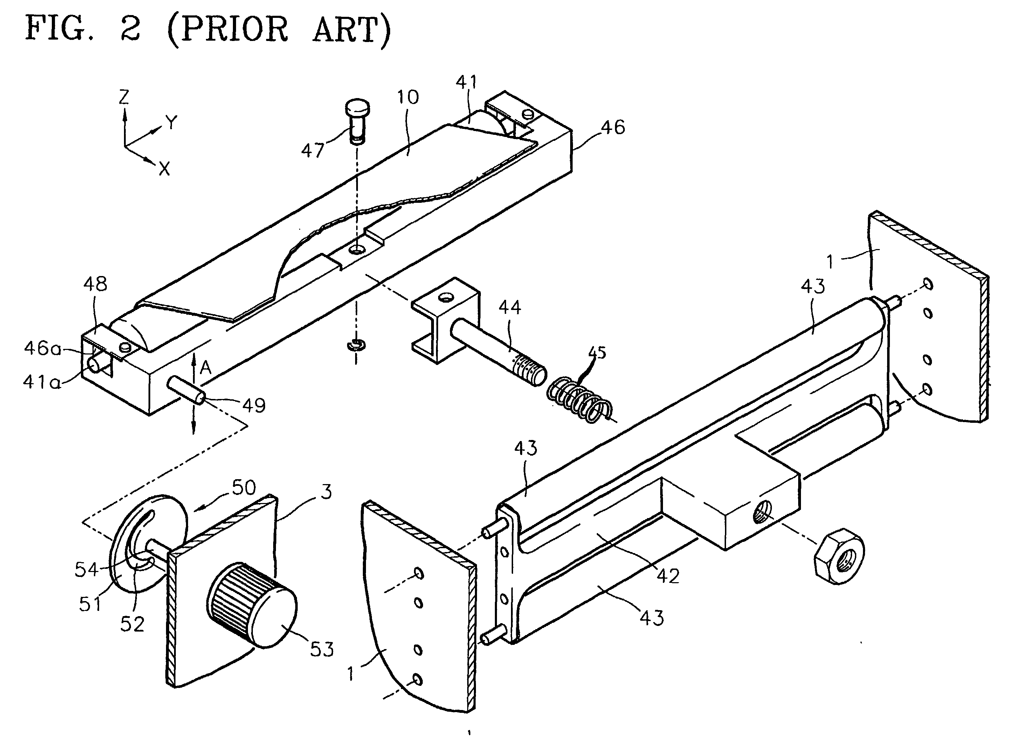

Referring to Figures 1 and 2, a conventional photoreceptor belt steering apparatus 40 includes a frame 42 installed in a printer main body 1, a pivot member 46 installed on the frame 42 capable of pivoting, a steering roller 41 installed on the pivot member 46 to support the photoreceptor belt 10 to circulate along a predetermined path, a pair of stabilizing rollers 43 installed at the frame 42 to flatten the photoreceptor belt 10 passing after the steering roller 41, and an adjusting unit 50 installed at the printer main body 1 to adjust the tilt of the steering roller 41 in upward and downward directions as indicated by arrows "A".

The pivot member 46 is coupled to a pivot bar 44 which is elastically coupled to the frame 42 by a coupling pin 47 so as to be capable of pivoting around a portion where the coupling pin 47 is coupled to a surface of the pivot member 46 in the X-Y plane. The pivot member 46 pivots in a direction to compensate for uneven pressure being applied to a contact portion between the steering roller 41 and the photoreceptor belt 10 by a resilient member 45 interposed between the pivot bar 44 and the frame 42. A rotational shaft 41a of the steering roller 41 is coupled to an installation groove 46a formed in the pivot member 46. An elastic piece 48 is installed at the installation groove 46a to support the rotational shaft 41a of the steering roller 41 by pressing the rotational shaft 41a.

The adjusting unit 50 includes a driving motor 53 fixed to a frame 3, a cam member 51 coupled to a rotational shaft 54 of the driving motor 53 and having a cam groove 52, and a pivot guide protrusion 49 coupled to the pivot member 46 and inserting into the cam groove 52. Thus, as the driving motor 53 rotates, the position of the cam groove 52 varies so that the height of the pivot guide protrusion 49 changes. Accordingly, the steering roller 41 pivots around the pivot bar 44 in the direction indicated by arrows "A".

Therefore, when a lateral slip of the photoreceptor belt 10 is detected by the lateral-slip detecting sensor, the steering roller 41 is tilted according to the position of the cam member 51. As a result, as the photoreceptor belt 10 moves in a latitudinal direction, the lateral slip is corrected.

The respective stabilizing rollers 43 are installed at the frame 42 parallel to the steering roller 41 and contact a portion of the photoreceptor belt 10 proceeding toward the steering roller 41 and a portion of the photoreceptor belt 10 having passed the steering roller 41 to prevent wrinkles of the photoreceptor belt 10. Also, the stabilizing rollers 43 allow the change in height of the photoreceptor belt 10 according to steering to not affect the laser scanning unit 80.

However, in the conventional photoreceptor belt steering apparatus having the above structure, wrinkles of the photoreceptor belt 10 may easily occur since the entire steering apparatus 40 is tilted to correct the lateral slip of the photoreceptor belt 10. Thus, since two stabilizing rollers 43 are required and since the distance between the stabilizing rollers 43 and the steering roller 41, "x" in Figure 1, should be large enough to flatten the wrinkles of the photoreceptor belt 10 by the steering roller 41, miniaturization of the printer is limited.

Further, since the elastic member 45 interposed between the pivot bar 44 and the frame 42 applies tension to the photoreceptor belt 10, the tension should be removed and the installation structure becomes complicated.

US-A-5,246,099 discloses a belt steering roller mechanism wherein outer portions of the steering roller are deformable by means of rigid rods 45 coupled to flange plates 55. The outer portions, when deformed, lie at an inclination angle with respect to a central portion of the steering roller, to give a steering effect to a photoreceptor belt.

It is an aim of at least preferred embodiments of the present invention to provide a photoreceptor belt steering apparatus for a printer in which a lateral slip of the photoreceptor belt can be corrected, ideally without tilting the rollers supporting the photoreceptor belt.

According to the present invention there is provided a photoreceptor belt steering apparatus for correcting a lateral slip of a photoreceptor belt for a printer, comprising: a shaft; a guide roller rotatably located on the shaft for guiding the circulation of said photoreceptor belt; a steering roller rotatably located on the shaft coaxial with said guide roller, the steering roller being inclinable with respect to the guide roller; and a driving means for controlling an inclination angle of said steering roller; characterised in that: said steering roller comprises a spacer located inclined at a predetermined angle with respect to said shaft, and a shell rotatably coupled to said spacer, the shell having an outer circumferential surface for contacting said photoreceptor belt, said steering roller for correcting a lateral slip of the photoreceptive belt by changing the inclination angle of said shell with respect to said shaft according to the pivot angle of said shaft; and said driving means is arranged to rotate said shaft.

Preferably, said shaft is rotatably mounted in a frame.

Preferably, said steering roller operatively contacts a non-image area located to one side of an image area of said photoreceptor belt.

Preferably, the outer circumferential surface of said shell has a round shape to increase the area in contact with said photoreceptor belt.

Preferably, said driving means comprises:
a driving source, installed at said frame and having a rotational shaft being driven, for providing a rotational force; and
a gear member, disposed between said rotational shaft and said shaft, for transferring the rotational force provided from said driving source to said shaft.

Preferably, two or more of said steering rollers are provided.

Preferably, the steering rollers are arranged either side of the guide roller.

Preferably, one or more supplementary guide rollers are arranged on 714 said shaft outside said steering rollers.

In the preferred embodiment there is provided a photoreceptor belt steering apparatus for a printer installed at a frame for correcting a lateral slip of a photoreceptor belt which includes a shaft rotatably installed at the frame; a guide roller, rotatably installed at the shaft, for guiding the circulation of the photoreceptor belt as a portion of the outer circumference of the guide roller contacts the photoreceptor belt; a steering roller, arranged at the shaft next to the guide roller and comprising a spacer installed to tilt a predetermined angle with respect to the outer circumferential direction of the shaft and a tilting shell rotatably installed on the outer circumference of the spacer and having the outer circumferential surface thereof being in contact with the photoreceptor belt, for correcting a lateral slip of the photoreceptor belt contacting the outer circumference of the tilting shell by changing the inclination direction of the tilting shell according to a pivot angle of the shaft; and a driving means, installed between the frame and the shaft, for controlling the degree of pivot of the shaft.

For a better understanding of the invention, and to show how embodiments of the same may be carried into effect, reference will now be made, by way of example, to the accompanying diagrammatic drawings, in which:
Figure 1 is a diagram schematically showing a structure of a printer employing a conventional photoreceptor belt steering apparatus;.
Figure 2 is an exploded perspective view illustrating the conventional photoreceptor belt steering apparatus;
Figure 3 is a sectional view showing a photoreceptor belt steering apparatus for a printer according to a preferred embodiment of the present invention;
Figure 4 is a perspective view illustrating the photoreceptor belt steering apparatus for a printer according to a preferred embodiment of the present invention; and
Figures 5-7 are views for showing the operation of the photoreceptor belt steering apparatus for a printer according to a preferred embodiment of the present invention.

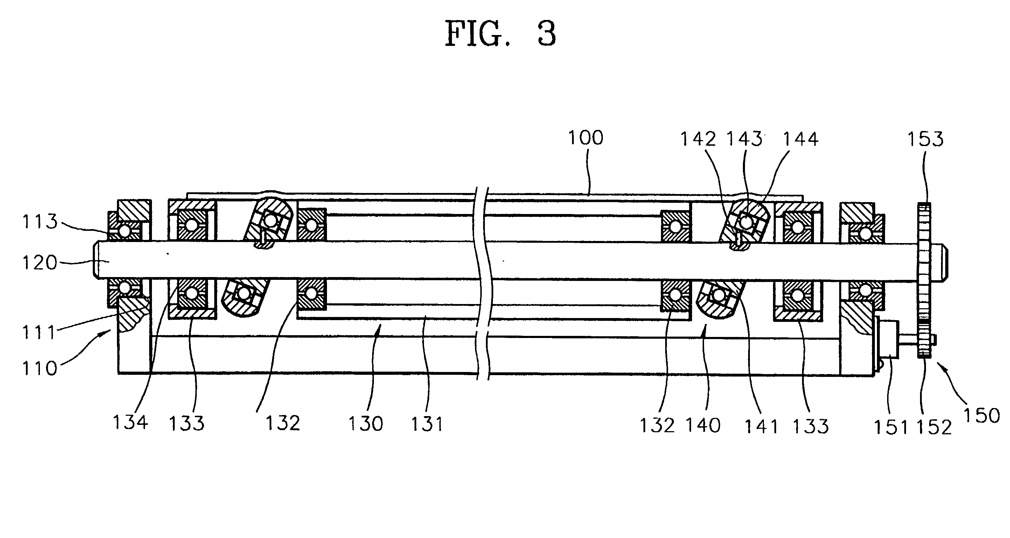

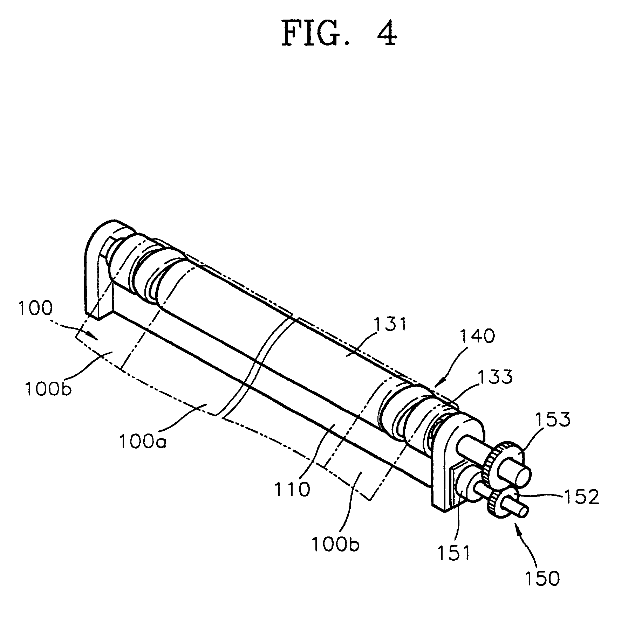

As shown in Figures 3 and 4, the photoreceptor belt steering apparatus according to the preferred embodiment of the present invention includes a frame 110, a shaft 120 rotatably mounted on the frame 110, a guide roller 130 rotatably installed on the shaft 120 for guiding the circulation of the photoreceptor belt 100, a steering roller 140 arranged next to the guide roller 130 for correcting a lateral slip of the photoreceptor belt 100, and a driving means 150 installed between the frame 110 and the shaft 120 for controlling the degree of pivot of the shaft 120.

The frame 110 has a generally U-shaped structure in which both ends thereof face each other being separated a predetermined distance so that both ends of the shaft 120 can be rotatably installed. Suitably, the frame 110 has an installation groove 111 for receiving the shaft 120.

A first bearing 113 for supporting the shaft 120 to be capable of rotating with respect to the frame 110 is installed in the installation groove 111. A guide roller 130 and at least one a steering roller 140 are rotatably installed at the outer circumferential surface of the shaft 120.

The guide roller 130 being in contact with the photoreceptor belt 100 at a portion of the outer circumference thereof guides the circulation of the photoreceptor belt 100. The guide roller 130 is a hollow cylindrical roller and rotatably installed at the shaft 120 by a plurality of second bearings 132 and 134. The guide roller 130 can include a first guide roller 131 for supporting an image area 100a of the photoreceptor belt 100 and a pair of second guide rollers 133, arranged being spaced apart from the first guide roller 131, for supporting both ends of the photoreceptor belt 100. Here, the steering roller 140 is disposed between the first guide roller 131 and the second guide roller 133 to correct a lateral slip of the photoreceptor belt 100.

The steering roller 140 is installed at an angle to the shaft 120 around the guide roller 130 and the direction of the angle is determined by the pivot angle of the shaft 120. Accordingly, the degree of inclination at a portion contacting the photoreceptor belt 100 of the steering roller 140 is adjusted so that the lateral slip of the photoreceptor belt 100 is corrected. Preferably, the steering roller 140 is installed to contact the non-image area 100b of the photoreceptor belt 100.

Thus, the steering roller 140 includes a spacer 141 installed to tilt a predetermined angle with respect to the outer circumferential direction of the shaft 120, a tilting shell 144 rotatably installed on the outer circumference of the spacer 141 having the same angle of inclination as the spacer 141, and a third bearing 143 arranged between the spacer 141 and the tilting shell 144.

The spacer 141 has a hollow central aperture of a diameter corresponding to the outer diameter of the shaft 120 so that the spacer 141 can be coupled to the shaft 120 at an angle. The aperture is formed to be angled with respect to the outer circumference of the shaft 120, and thus, the entire spacer 141 is arranged to be angled when the aperture is coupled to the shaft 120. Here, a coupling groove is formed throughout the shaft 120 and the spacer 141, and the spacer 141 can be fixed to the shaft 120 when a set screw 142 is assembled to the coupling groove.

The tilting shell 144 is rotatably installed at the outer circumference of the spacer 141 by the third bearing 143 and is in contact with the photoreceptor belt 100 to correct a lateral slip of the shaft 120 in a longitudinal direction thereof. The outer circumferential surface of the tilting shell 144 preferably has a round shape to increase the area in contact with the photoreceptor belt 100. That is, the area of the portion contacting the photoreceptor belt 100 can be increased by curving a portion of the photoreceptor belt 100 contacting the outer circumference of the tilting shell 144, which can be available by making the height of both end portions of the tilting shell 144 to be the same as that of the neighboring guide roller 130 and making the height of the central portion of the tilting shell 144 to be higher than that of the guide roller 130. Also, it is preferable that the outer circumferential surface of the tilting shell 144 has a processed surface, e.g., by a rubbing process, in order to increase the frictional force with respect to the photoreceptor belt 100.

Although the steering roller 140 is shown at both sides of the guide roller 130 in Figures 3 and 4 and in the above description, it may alternatively be provided at only one side of the guide roller 130.

The driving means 150 is installed between the frame 110 and the shaft 120. The driving means 150 controls the pivot angle of the shaft 120 to correct a lateral slip of the photoreceptor belt 100 by adjusting the tilting angle of the steering roller 140. Thus, the driving means 150 includes a driving source 151 for providing a rotational force, and gear members 152 and 153 for transferring the rotational force provided from the driving source 151 to the shaft 120.

The driving source 151 has a rotational shaft installed at the frame 110 to rotate. The gear members include a first gear 152 rotating around the rotational shaft, and a second gear 153 rotating around the shaft 120 being engaged with the first gear 152.

Here, the pivot angle of the shaft 120 can be controlled by arranging the rotational shaft of the driving source 151 to be coaxial with the shaft 120 without the gear members 152 and 153.

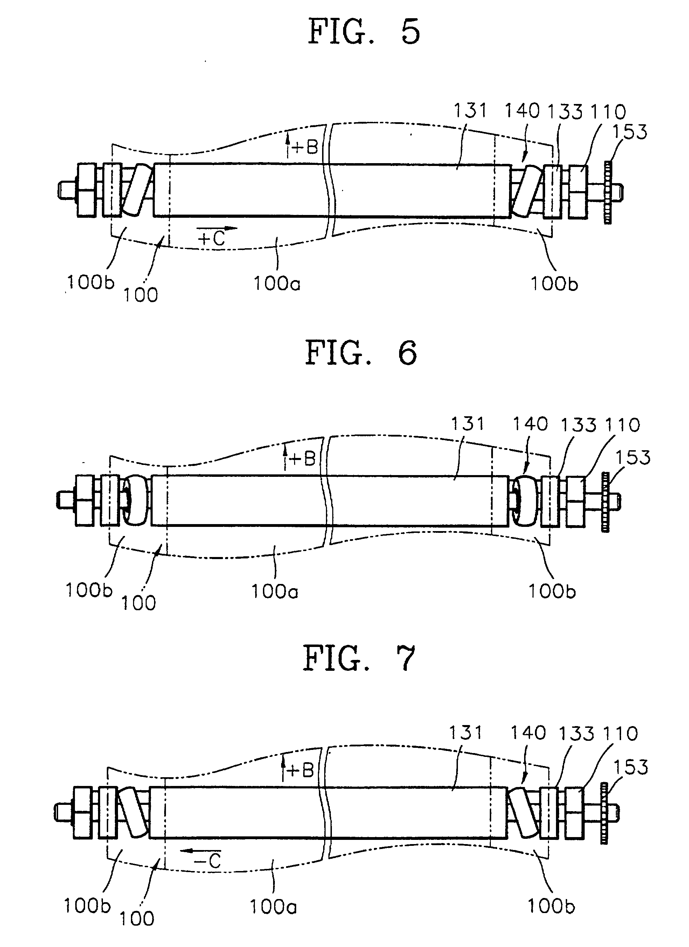

Hereinafter, the operation of the photoreceptor belt steering apparatus according to the preferred embodiment of the present invention will be described with reference to Figures 5-7.

As shown in Figure 5, when the photoreceptor belt 100 circulating in a direction indicated by arrow "+B" has a lateral slip in a direction indicated by arrow "-C", the steering roller 140 is pivoted clockwise by rotating the shaft 120 such that a portion contacting the photoreceptor belt 100 can tilt to the right from a planar view. Accordingly, the photoreceptor belt 100 moves in a direction indicated by arrow "+C". Thus, a force in the direction of rotation of the guide roller 130 and a steering force in the "+C" direction according to the degree of tilt of the steering roller 140 are applied to the photoreceptor belt 100 so that the photoreceptor belt 100 gradually moves in the "+C" direction as it rotates, to thereby correct the lateral slip of the photoreceptor belt 100 in the "-C" direction.

As shown in Figure 6, when the photoreceptor belt 100 rotates without a lateral slip, the steering roller 140 is arranged parallel to the radius direction of the shaft 120 from the planar view. Thus, a force in the longitudinal direction of the shaft 120 is not applied to the photoreceptor belt 100.

As shown in Figure 7, when the photoreceptor belt 100 slips laterally in the "+C" direction, the shaft 120 is rotated by the driving means 150 to pivot the steering roller 140 counterclockwise at a predetermined angle. Thus, a force in a rotational direction of the guide roller 130 and a steering force in the "-C" direction according to the pivot angle of the steering roller 140 are applied to the photoreceptor belt 100. Accordingly, the photoreceptor belt 100 moves in the "-C" direction as it rotates so that the lateral slip of the photoreceptor belt 100 in the "+C" direction can be corrected.

As described above, the photoreceptor belt steering apparatus is rotatably installed at the shaft 120 so that a lateral slip of the photoreceptor belt 100 can be corrected according to the pivot of the steering roller 140 without tilting the guide roller 130 which guides the rotation of the photoreceptor belt. Also, a pair of stabilizing rollers which are required in the conventional apparatus are not needed so that the size of the entire steering apparatus can be made compact.

## Claims

1. A photoreceptor belt steering apparatus for correcting a lateral slip of a photoreceptor belt for a printer, comprising:
a shaft (120);
a guide roller (130) rotatably located on the shaft (120) for guiding the circulation of said photoreceptor belt (100);
a steering roller (140) rotatably located on the shaft (120) coaxial with said guide roller (130), the steering roller (140) being inclinable with respect to the guide roller (130); and
a driving means (150) for controlling an inclination angle of said steering roller (140);
**characterised in that**:
said steering roller (140) comprises a spacer (141) located inclined at a predetermined angle with respect to said shaft (120), and a shell (144) rotatably coupled to said spacer (141), the shell (144) having an outer circumferential surface for contacting said photoreceptor belt (100), said steering roller (140) for correcting a lateral slip of the photoreceptive belt by changing the inclination angle of said shell (144) with respect to said shaft (120) according to the pivot angle of said shaft (120); and
said driving means (150) is arranged to rotate said shaft (120).

2. A steering apparatus as claimed in claim 1, wherein said shaft (120) is rotatably mounted in a frame (110).

3. A steering apparatus as claimed in claim 1 or 2, wherein said steering roller (140) operatively contacts a non-image area located to one side of an image area of said photoreceptor belt (100).

4. A steering apparatus as claimed in any of claims 1 to 3, wherein the outer circumferential surface of said shell (144) has a round shape to increase the area in contact with said photoreceptor belt (100).

5. A steering apparatus as claimed in any of claims 1 to 4, wherein said driving means (150) comprises:
a driving source (151), installed at said frame (110) and having a rotational shaft being driven, for providing a rotational force; and
a gear member (152,153), disposed between said rotational shaft and said shaft (120), for transferring the rotational force provided from said driving source to said shaft (120).

6. A steering apparatus as claimed in any of claims 1 to 5, wherein two or more of said steering rollers are provided.

7. A steering apparatus as claimed in claim 6, wherein the steering rollers (140) are arranged either side of the guide roller (131).

8. A steering apparatus as claimed in claim 7, wherein one or more supplementary guide rollers (133) are arranged on said shaft (120) outside said steering rollers (140).

## Patentansprüche

1. Fotorezeptorband-Steuervorrichtung zum Korrigieren des seitlichen Verrutschens eines Fotorezeptorbandes für einen Drucker, enthaltend:
eine Welle (120);
eine Führungswalze (130), die drehbar auf der Welle (120) gelagert ist, um den Umlauf des Fotorezeptorbandes (100) zu führen;
eine Steuerwalze (140), die drehbar auf der Welle (120) koaxial mit der Führungswalze (130) gelagert ist, wobei die Steuerwalze (140) im Bezug auf die Führungswalze (130) geneigt werden kann; und
eine Antriebseinrichtung (150) zum Steuern eines Neigungswinkels der Steuerwalze (140);
**dadurch gekennzeichnet, daß**:
die Steuerwalze (140) einen Abstandshalter (141) enthält, der im Bezug auf die Welle (120) in einem vorbestimmten Winkel geneigt angeordnet ist, und eine Hülse (144), die drehbar mit dem Abstandshalter (141) verbunden ist, wobei die Hülse (144) eine Außenumfangsfläche zum Berühren des Fotorezeptorbandes hat (100), die Steuerwalze (140) das seitliche Verrutschen des Fotorezeptorbandes durch ändern des Neigungswinkels der Hülse (144) im Bezug auf die Welle (120) gemäß dem Schwenkwinkel der Welle (120) korrigiert und;
die Antriebseinheit (150) angeordnet ist, um die Welle (120) zu drehen.

2. Steuervorrichtung nach Anspruch 1, bei der die Welle (120) drehbar in einem Rahmen (110) gelagert ist.

3. Steuervorrichtung nach Anspruch 1 oder 2, bei der die Steuerwalze (140) wirkungsmäßig einen Nicht-Bildbereich berührt, der sich auf einer Seite eines Bildbereiches des Fotorezeptorbandes (100) befindet.

4. Steuervorrichtung nach Anspruch 1 bis 3, bei der die Außenumfangsfläche der Hülse (144) eine runde Form hat, um den Bereich zu vergrößern, der das Fotorezeptorband (100) berührt.

5. Steuervorrichtung nach einem der Ansprüche 1 bis 4, bei der die Antriebseinrichtung (150) enthält:
eine Antriebsquelle (151), die am Rahmen (110) angebracht ist und über eine angetriebene Drehwelle verfügt, um eine Drehkraft zu erzeugen; und
ein Getriebeelement (152, 153), das sich zwischen der Drehwelle und der Welle (120) befindet, um die Drehkraft zu übertragen, die von der Antriebsquelle an die Welle (120) abgegeben wird.

6. Steuervorrichtung nach einem der Ansprüche 1 bis 5, bei der zwei oder mehr der Steuerwalzen vorgesehen sind.

7. Steuervorrichtung nach Anspruch 6, bei den die Steuerwalzen (140) auf beiden Seiten der Führungswalze (131) angeordnet sind.

8. Steuervorrichtung nach Anspruch 7, bei der eine oder mehrere zusätzliche Führungswalzen (133) auf der Welle (120) außerhalb der Steuerwalzen (140) angeordnet sind.

## Revendications

1. Dispositif de direction d'une bande photoréceptrice pour corriger un glissement latéral d'une bande photoréceptrice pour une imprimante, comprenant :
un arbre (120) ;
un rouleau de guidage (130) fixé de manière rotative sur l'arbre (120) afin de guider la circulation de ladite bande photoréceptrice (100) ;
un galet de direction (140) fixé de manière rotative sur l'arbre (120) coaxial avec ledit rouleau de guidage (130), le galet de direction (140) étant inclinable par rapport au rouleau de guidage (130) et
un moyen de commande (150) afin de contrôler un angle d'inclinaison dudit galet de direction (140) ;
**caractérisé en ce que** :
ledit galet de direction (140) comprend une pièce d'écartement (141) fixée inclinée suivant un angle prédéterminé par rapport audit arbre (120) et une coque (144) couplée de manière rotative à ladite pièce d'écartement (141), la coque (144) ayant une surface circonférentielle extérieure afin de venir en contact avec ladite bande photoréceptrice (100), ledit galet de direction (140) afin de corriger un glissement latéral de la bande photoréceptrice en changeant l'angle d'inclinaison de ladite coque (144) par rapport audit arbre (120) selon l'angle de pivotement dudit arbre (120) et
ledit moyen de commande (150) est disposé afin de faire tourner ledit arbre (120).

2. Dispositif de direction selon la revendication 1, dans lequel ledit arbre (120) est monté de manière rotative dans un bâti (110).

3. Dispositif de direction selon la revendication 1 ou 2, dans lequel ledit galet de direction (140) vient en contact de manière active avec une surface non imagée située d'un côté d'une surface imagée de ladite bande photoréceptrice (100).

4. Dispositif de direction selon l'une quelconque des revendications 1 à 3, dans lequel la surface circonférentielle extérieure de ladite coque (144) a une forme ronde pour augmenter la surface en contact avec ladite bande photoréceptrice (100).

5. Dispositif de direction selon l'une quelconque des revendications 1 à 4, dans lequel ledit moyen de commande (150) comprend :
une source d'entraînement (151), installée sur ledit bâti (110) et ayant un arbre rotatif commandé afin de procurer une force rotative et
un élément à engrenages (152, 153), disposé entre ledit arbre rotatif et ledit arbre (120), afin de transférer la force rotative procurée par ladite source d'entraînement audit arbre (120).

6. Dispositif de direction selon l'une quelconque des revendications 1 à 5, dans lequel deux desdits galets de direction ou plus sont proposés.

7. Dispositif de direction selon la revendication 6, dans lequel les galets de direction (140) sont disposés sur l'un ou l'autre côté du rouleau de guidage (131).

8. Dispositif de direction selon la revendication 7, dans lequel un ou plusieurs rouleaux de guidage supplémentaires (133) sont disposés sur ledit arbre (120) à l'extérieur desdits galets de direction (140).
